# EUROPEAN PATENT APPLICATION

(11) **EP 4 693 836 A1**
(43) Date of publication of application: **11.02.2026**
(21) Application number: 24784673.6
(22) Date of filing: 08.03.2024
(51) Int. Cl.: H02K 3/50, H02K 24/00

(54) **STATOR ASSEMBLY**

(30) Priority: 05.04.2023 JP 2023061764
(71) Applicant: Minebea Mitsumi Inc., Kitasaku-gun, Nagano 3890293 (JP)
(72) Inventor: OCHIAI, Takaaki, Kitasaku-gun, Nagano 389-0293 (JP); SUEYOSHI, Yuki, Kitasaku-gun, Nagano 389-0293 (JP)
(74) Representative: Winter, Brandl - Partnerschaft mbB
(86) International application number: PCT/JP2024/009069
(87) International publication number: WO 2024/209878

(57) **Abstract**

[Problem]

To provide a stator assembly (100) capable of connecting a terminal end (131) of a magnet wire of a stator winding (130) to a terminal (141) without using TIG welding, and reducing a thickness of a terminal block disposed with the terminal (141).

[Solving method]

A stator (100) of a resolver (1) includes a stator core (110) including pole teeth (112) wound around with a stator winding (130), and a terminal block part (140) fixed to the stator core (110). The terminal block part (140) includes a plurality of terminals (141) corresponding to terminal ends (131) of the stator winding (130), and a connecting piece (150) sandwiching the terminal ends (131) of the stator winding (130) between the terminals (141) and the connecting piece (150). Coating of the terminal ends (131) of the stator winding (130) is melted between the terminals (141) and the connecting piece (150), so that the terminal ends (131) and the terminals (141) are electrically connected to each other.

## Description

### Technical Field

The present invention relates to a stator assembly, and more specifically to an improvement in a connection structure between a terminal end of a magnet wire of a stator winding and a terminal.

### Background Art

Resolvers are known as a means for detecting a rotation angle. A resolver includes, for example, a rotor fixed to a rotation shaft of a rotary electric machine such as a motor and rotates, and a stator fixed to a housing or the like and disposed opposing the rotor in a radial direction. The stator is wound around with a stator winding including an excitation winding and an output winding, and the output winding includes windings outputting a sin signal and a cos signal. When an excitation voltage is applied to the excitation winding and the rotor of the resolver rotates, dimensions of a gap formed between the rotor and the stator change, and a voltage corresponding to this change is induced at the output windings. The voltage generated at the output windings is a signal reflecting the rotation angle of the rotor, and the angle of the rotation shaft can be detected by this signal.

A terminal pin connected to a winding end of the stator winding is embedded by insert molding in a terminal pin base part formed integrally with an insulator. A winding connection part bound and connected to the winding end of the stator winding is formed at one end of the terminal pin, and a terminal connected to a core wire of a lead wire for connection to an external device is formed at the other end of the terminal pin.

In the related art, a winding structure of a magnet wire (coated wire) around a terminal pin of a resolver or the like is known. In the winding structure, the magnet wire is bound to a binding part of the terminal pin and then welded by TIG welding (e.g., see Patent Document 1). In Patent Document 1, a circumferential surface 2a of a terminal pin 2 is wound around with a magnet wire 3. Heating an upper part 2b of the terminal pin 2 and a winding start part 3A by TIG welding or the like causes melting and a weld part 4 having a spherical shape to be formed, and the terminal pin 2 and the magnet wire 3 are integrally connected to each other.

### Citation List

### Patent Literature

Patent Document 1: JP 2011-129313 A

### Summary of Invention

### Technical Problem

As described in Patent Document 1, a ball-shaped weld part is formed at the terminal pin bound and connected by TIG welding. At this time, thinning of a magnet wire of a stator winding adjacent to the ball-shaped weld part may occur, and as a result, the magnet wire may break. For this reason, inspection may be performed by image analysis using a camera or the like. However, there is a problem in that variations in TIG welding cause variations in the state of the ball-shaped weld part and reduces the accuracy of the image analysis.

In addition, in TIG welding, since a bound and connected part between a terminal end of a magnet wire and a terminal pin is welded, the terminal pin needs to have a predetermined length in an axial direction, hindering thickness reduction.

The present invention has been made in view of the above circumstances, and an object is to provide a stator assembly capable of connecting a terminal end of a magnet wire of a stator winding to a terminal without using TIG welding, and reducing a thickness of a terminal block provided with the terminal.

### Solution to Problem

The present invention is a stator assembly including: a stator core including pole teeth wound around with a stator winding; and a terminal block part fixed to the stator core. The terminal block part includes a plurality of terminals corresponding to terminal ends of the stator winding and a connecting piece sandwiching the terminal ends of the stator winding between the terminals and the connecting piece. Coating of the terminal ends of the stator winding is melted between the terminals and the connecting piece, so that the terminal ends and the terminals are electrically connected to each other.

### Brief Description of Drawings

FIG. 1 is a plan view of a variable reluctance (VR) type resolver of an embodiment.
FIG. 2(A) is a perspective view of a stator of FIG. 1, and FIG. 2(B) is an enlarged view of a part indicated by an arrow B in FIG. 2(A).
FIG. 3(A) is a cross-sectional view taken along a line A-A in FIG. 1, FIG. 3(B) is a view as seen from a direction of an arrow B in FIG. 1, and FIG. 3(C) is a cross-sectional view taken along a line C-C in FIG. 1.
FIG. 4 is a plan view illustrating a state before coils are wound around the stator.
FIG. 5(A) is a plan view illustrating a state of the coils being wound around the stator, and FIG. 5(B) is a cross-sectional view taken along a line B-B in FIG. 5(A).
FIG. 6(A) is a perspective view illustrating a state of the coils being wound around the stator, and FIG. 6(B) is an enlarged view of a part indicated by an arrow B in FIG. 6(A).
FIG. 7(A) is a plan view illustrating a connecting piece according to the embodiment, FIG. 7(B) is a side view, FIG. 7(C) is a cross-sectional view taken along a line C-C in FIG. 7(A), and FIG. 7(D) is an enlarged view of a part indicated by an arrow D in FIG. 7(C).
FIG. 8 is a perspective view of the connecting piece according to the embodiment as viewed from a back side.

### Description of Embodiments

### 1. Schematic Configuration of Resolver

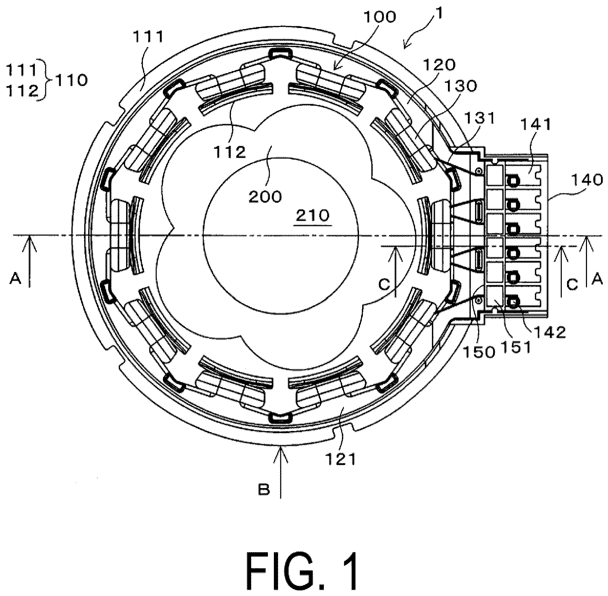

FIG. 1 illustrates a resolver 1 of a variable reluctance (VR) type used for detecting a rotation angle of a rotation shaft of a motor, for example. The resolver 1 is an inner rotor type resolver with a rotor 200 disposed at an inner side of a stator 100 having an annular shape. The rotor 200 is fitted to a shaft 210 extending in an axial direction and coupled to a rotation shaft of a motor or the like, and is rotatable at the inner side of the stator 100.

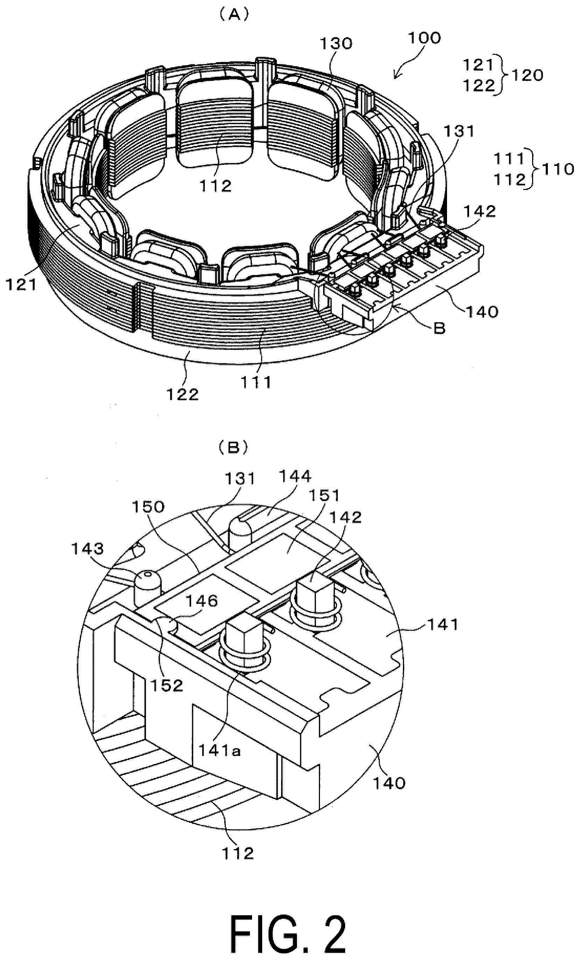

The stator 100 includes a stator core 110 having an annular shape. The stator core 110 is formed by stacking a plurality of cores made of a magnetic steel sheet (e.g., an electromagnetic steel sheet) in the axial direction, and includes a core back part 111 having an annular shape and a plurality of (ten in this example) pole teeth 112 protruding from the core back part 111 toward an inner circumferential side at equal intervals. Magnetic poles at the stator core 110 side are formed by the plurality of pole teeth 112. Note that terms indicating directions such as "upper" and "lower" in the following description indicate the directions in FIG. 2. An extending direction of the shaft 210 is referred to as the "axial direction", and a direction orthogonal to the axial direction is referred to as a "radial direction".

A stator winding 130 is wound around the plurality of pole teeth 112 via an insulator 120 made of an electrically insulating material (resin in this example). The insulator 120 includes an upper insulator 121 and a lower insulator 122. The upper insulator 121 and the lower insulator 122 are attached from the upper side and the lower side in the axial direction of the stator core 110, respectively, and are fixed to the stator core 110.

The stator winding 130 includes an excitation winding and an output winding. An excitation current is supplied to the excitation winding from the outside. The output winding includes a sin-phase output winding for outputting a sin-phase signal and a cos-phase output winding for outputting a cos-phase signal having a phase different from the phase of the sin signal by 90° along with a rotation of the rotor 200. A terminal end 131 of the stator winding 130 includes two excitation windings and four output windings, that is, a total of six windings.

### 2. Configuration of Terminal Block Part

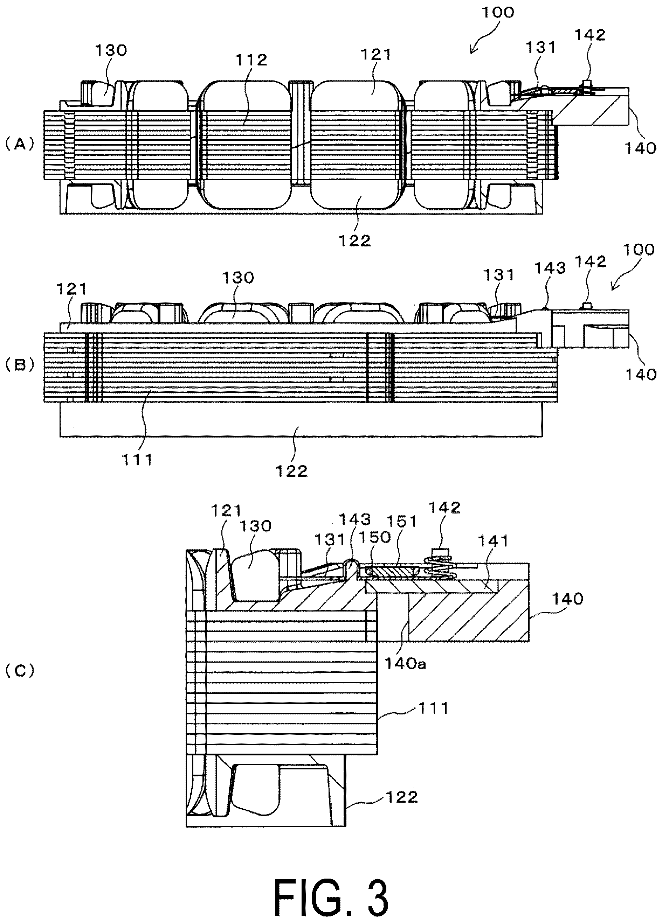

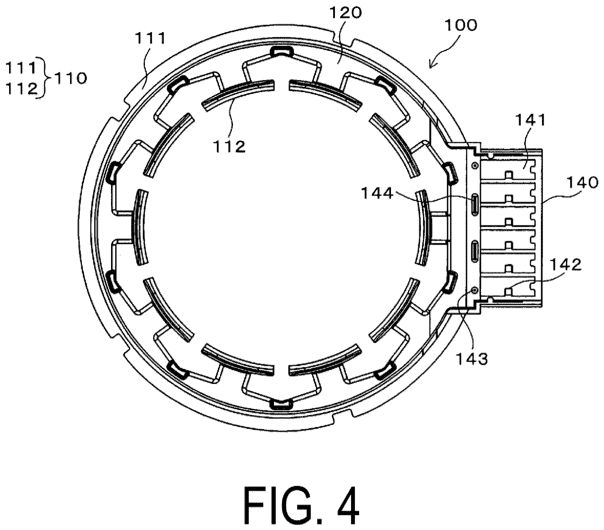

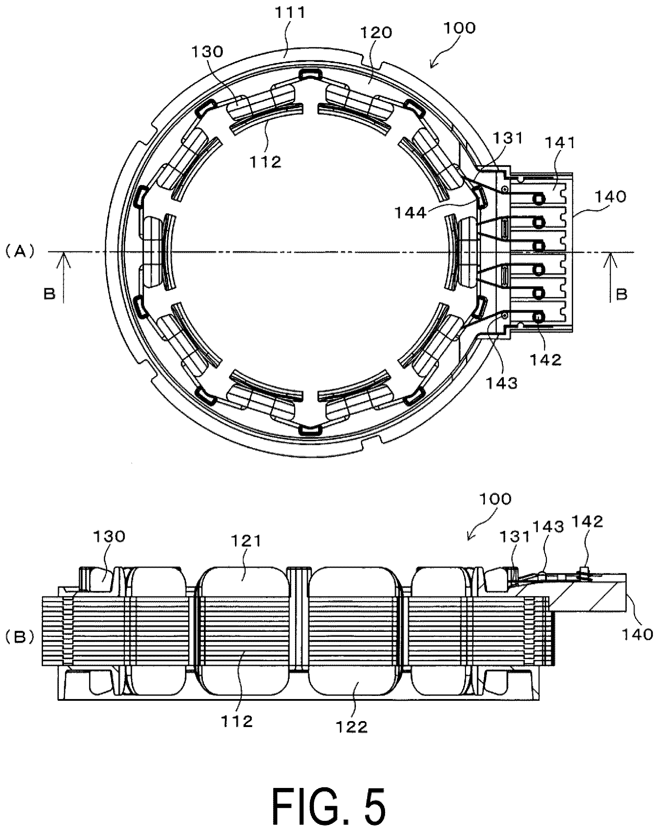

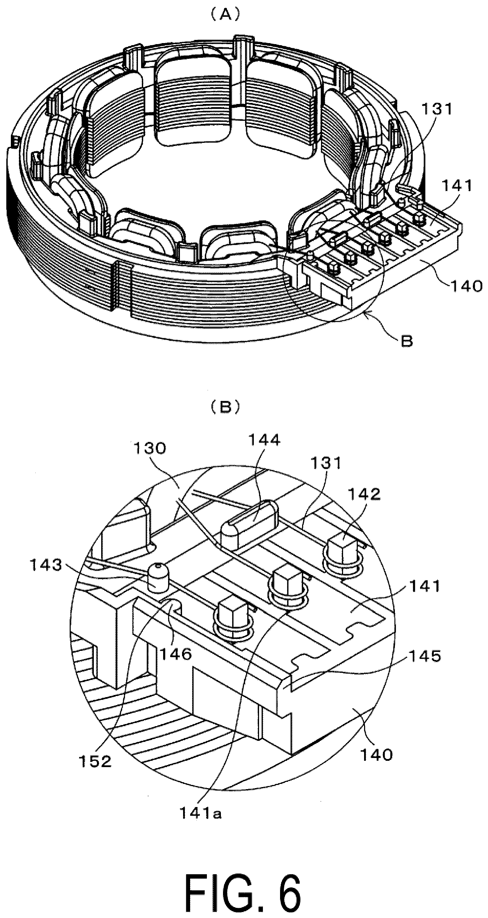

A terminal block part 140 extending outward in the radial direction is formed at the upper insulator 121 as a part of the upper insulator 121 by integral molding. As illustrated in FIGS. 4 to 6, in the terminal block part 140, a plurality of (in this case, six corresponding to the number of the terminal ends 131 of the stator winding 130) terminals 141 made of metal and extending toward the stator winding 130 side are embedded so as to be lined up in a lateral direction. The terminals 141 have a rectangular flat plate-like shape, and are injection-molded integrally with the upper insulator 121 using the terminals 141 as insert materials. The upper surfaces of the terminals 141 are exposed from an upper surface of the terminal block part 140, and parts of lower surfaces oppose through-holes 140a formed at the terminal block part 140 so as to extend in the axial direction (see FIG. 3(C)).

Notches 141a having a rectangular shape are formed at the terminals 141 (see FIG. 2(B)), and binding pins 142 as parts of the terminal block part 140 protrude from the notches 141a in the axial direction. The terminal ends 131 of magnet wires (coated wires) of the stator winding 130 are bound and connected to the binding pins 142.

Guide projections 143 projecting in the axial direction are formed integrally with the terminal block part 140 at locations separated from the binding pins 142 at both ends toward the stator winding 130 side. The terminal ends 131 led out from the stator winding 130 are hooked at the guide projections 143, so that the terminal ends 131 straightly reach binding start positions of the binding pins 142. A guide projection 144 having a large width is formed integrally with the terminal block part 140 at a location separated from a center of another pair of binding pins 142 toward the stator winding 130 side. Two terminal ends 131 led out from the stator winding 130 are hooked at both end parts of the guide projection 144, so that the terminal ends 131 straightly reach the binding start positions of the respective binding pins 142.

A connecting piece 150 is fixed between the binding pins 142 and the guide projections 143 and 144. The connecting piece 150 is a plate-like member elongated in an arrangement direction of the binding pins 142, and is disposed with pieces 151 at locations corresponding to the terminals 141. The connecting piece 150 is injection-molded integrally with the pieces 151 as insert materials using insulating resin. The pieces 151 are substantially rectangular flat plates made of a substantially rectangular metal material, and the terminal ends 131 of the stator winding 130 are sandwiched and pressed by the pieces 151 and the terminals 141.

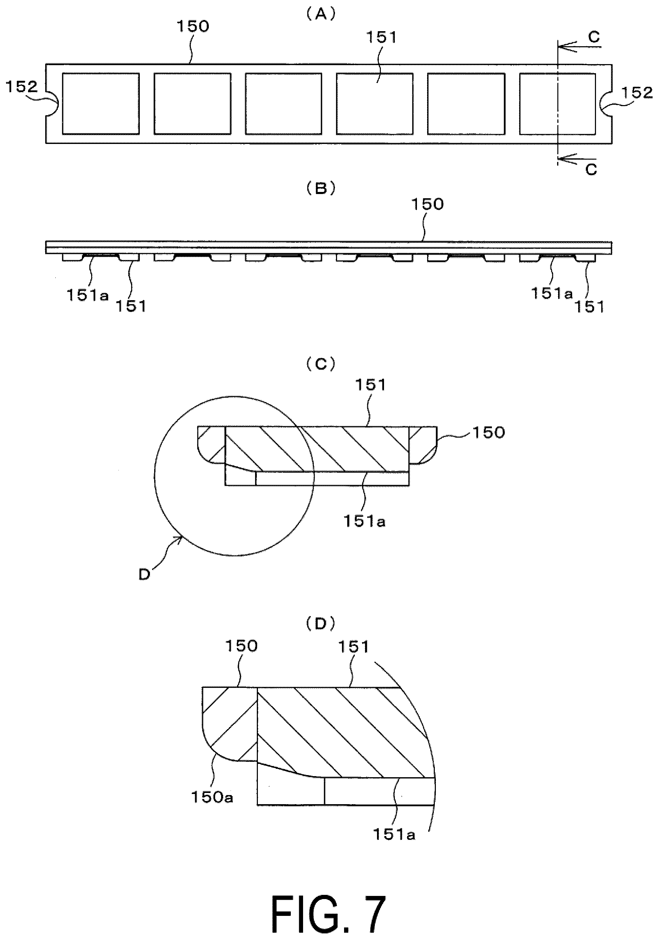

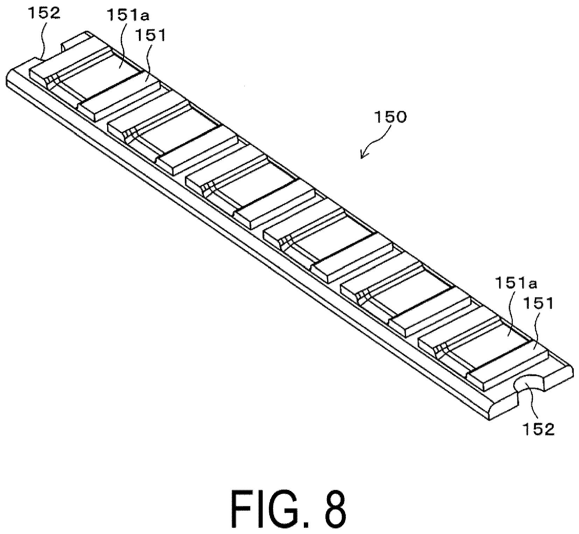

The pieces 151 are in contact with the terminals 141 in an appropriate manner. For example, as illustrated in FIGS. 7 and 8, grooves 151a for accommodating the terminal ends 131 are formed at the lower surfaces of the pieces 151. In this way, the pieces 151 and the terminals 141 are electrically connected to each other.

An outer peripheral edge of each of the pieces 151 is embedded in the resin, but a surface in the axial direction protrudes in the axial direction from the resin part and is exposed without being covered with the resin. In order to prevent breakage of the terminal ends 131 of the magnet wires when the terminal ends 131 of the magnet wires are sandwiched and pressed by the pieces 151 and the terminals 141, an outer peripheral edge of a surface of the connecting piece 150 opposing the terminal ends 131 side are removed to form an R-chamfer 150a.

The pieces 151 and the terminals 141 are heated and coating of the terminal ends 31 is melted, by applying a pressure to the pieces 151 and the terminals 141 while applying a current between the pieces 151 and the terminals 141. This is a thermal caulking method known as fusing, and the core wires of the terminal ends 131, the pieces 151, and the terminals 141 are joined to each other.

Recessed parts 152 having a substantially semicircular shape are formed at both end parts of the connecting piece 150 in a longitudinal direction. On the other hand, wall parts 145 protruding in the axial direction are formed at both end parts of the terminal block part 140. Protruding parts 146 protruding in directions opposing each other are formed at the wall parts 145, and the protruding parts 146 are fitted into the recessed parts 152. Core wires (not illustrated) of lead wires for outputting signals from the outside and signals to the outside are electrically connected by resistance welding at end parts of the terminals 141 at the opposite side of the connecting piece 150.

### 3. Method of Connecting Terminal End of Stator Winding

At the winding start side of the stator winding 130, the terminal end 131 of the magnet wire of the stator winding 130 fed from a nozzle of a winding machine (not illustrated) is bound and connected to the binding pin 142 formed at the terminal block part 140, passed over one end side of the terminal 141, passed between the guide projections 143 and 144 adjacent to each other, and wound around the pole teeth 112 of the stator core 110 a predetermined number of turns.

At the winding end side of the stator winding 130, the terminal end 131 of the magnet wire of the stator winding 130 wound around the pole teeth 112 is guided by the guide projection 143 formed at the terminal block part 140, passed between the guide projections 143 and 144 adjacent to each other, passed over the one end side of the terminal 141, and bound and connected to the binding pin 142 formed at the terminal block part 140.

Next, the connecting piece 150 is set at the terminal block part 140. In setting the connecting piece 150, positioning can be easily performed by fitting the recessed parts 152 formed at the connecting piece 150 to the protruding parts 146 formed at the terminal block part 140. By setting the connecting piece 150 at the terminal block part 140, the terminal end 131 of the magnet wire of each stator winding 130 is sandwiched between the piece 151 of the connecting piece 150 and the terminal 141.

Next, one of electrodes of, for example, a resistance heater is pressed against an exposed surface of the piece 151 of the connecting piece 150, and the other of the electrodes is inserted into the through-hole 140a of the terminal block part 140 and pressed against a back surface of the terminal 141. By energizing the electrodes in this state, the piece 151 and the terminal 141 are heated, and the coating of the magnet wire is melted. As a result, the core wire of the terminal end 131 is joined to the piece 151 and the terminal 141, and the terminal end 131 of the stator winding 130 sandwiched between the piece 151 and the terminal 141 is electrically connected to one end side of the terminal 141.

Finally, the terminal end 131 bound and connected to the binding pin 142 may be cut and removed, or the terminal end 131 may remain bound and connected to the binding pin 142 without being cut, and may be sealed with a potting agent applied to the bound and connected part.

### 4. Effects

In the stator 100 having the configuration described above, since the terminal ends 131 and the terminals 141 are electrically connected by melting the coating of the terminal ends 131 of the magnet wires of the stator winding 130 between the terminals 141 and the connecting piece 150, the terminal ends of the magnet wires can be connected to the terminals without using TIG welding. Therefore, various problems caused by ball-shaped weld parts generated by TIG welding can be avoided. In addition, since there is no need for a terminal pin protruding from the terminal block part 140 in the axial direction, the terminals 141 have a flat plate-like shape. Accordingly, the thickness of the terminal block part 140 in the axial direction can be reduced.

In particular, in the embodiment described above, since the grooves for accommodating the terminal ends 131 are formed at the lower surfaces of the pieces 151, the pieces 151 and the terminals 141 can be easily brought into contact with each other.

In addition, in the embodiment described above, since the recessed parts 152 are formed at both end parts of the connecting piece 150 and the recessed parts 152 are fitted with the protruding parts 146 formed at the terminal block part 140, the connecting piece 150 can be easily positioned with respect to the terminal block part 140. Note that it is also possible to form protruding parts at both end parts of the connecting piece 150 and form recessed parts at the terminal block part 140.

Further, since the connecting piece 150 is integrally injection-molded with the pieces 151 as insert materials using an insulating resin, the respective pieces 151 can be brought into contact with the terminals 141 by one operation, and thus the work efficiency is high.

### 5. Modifications

The present invention is not limited to the embodiment described above, and various modifications can be made as described below.
i) Although the grooves for accommodating the terminal ends 131 are formed at the lower surfaces of the pieces 151, the grooves may be formed at the upper surfaces of the terminals 141, or the grooves may be formed at both the lower surfaces of the pieces 151 and the upper surfaces of the terminals 141. Alternatively, a projection to be brought into contact with a counterpart may be formed at one or both of the lower surfaces of the pieces 151 and the upper surfaces of the terminals 141.
ii) Although the connecting piece 150 is integrally injection-molded with the pieces 151 as insert materials using insulating resin, but the pieces 151 can be placed on the respective terminals 141 and fused. In this case, the grooves for accommodating the terminal ends 131 of the magnet wires can be formed at surfaces of the pieces 151 facing the terminal 141 side to position the pieces 151.

### Reference Signs List

1 Resolver; 100 Stator; 110 Stator core; 111 Core back part; 112 Pole tooth; 120 Insulator; 121 Upper insulator; 122 Lower insulator; 130 Stator winding; 131 Terminal end; 140 Terminal block part; 140a Through-hole; 141 Terminal; 141a Notch; 142 Binding pin; 143, 144 Guide projection; 146 Protruding part; 150 Connecting piece; 150a R-chamfer; 151 Piece; 151a Groove; 152 Recessed part; 200 Rotor; 210 Shaft.

## Claims

1. A stator assembly (100) comprising:
a stator core (110) including pole teeth (112) wound around with a stator winding (130); and
a terminal block part (140) fixed to the stator core (110), wherein
the terminal block part (140) includes:
a plurality of terminals (141) corresponding to terminal ends (131) of the stator winding (130); and
a connecting piece (150) sandwiching the terminal ends (131) of the stator winding (130) between the terminals (141) and the connecting piece (150), and
coating of the terminal ends (131) of the stator winding (130) is melted between the terminals (141) and the connecting piece (150), so that the terminal ends (131) and the terminals (141) are electrically connected to each other.

2. The stator assembly (100) according to claim 1, wherein the terminals (141) have a flat plate-like shape and are integrally molded with the terminal block part (140) by resin using the terminals (141) as insert materials.

3. The stator assembly (100) according to claim 1 or 2, wherein
the terminals (141), the terminal ends (131) of the stator winding (130), and the connecting piece (150) are joined to each other by fusing at one end of the terminals (141), and
core wires of lead wires to be connected to an outside are electrically connected to the other end of the terminals (141).

4. The stator assembly (100) according to any one of claims 1 to 3, wherein a guide projection (144) for hooking the terminal ends (131) of the stator winding (130) is formed integrally with the terminal block part (140) between the one end of the terminals (141) and the stator core (110).

5. The stator assembly (100) according to any one of claims 1 to 4, wherein binding pins (142) for binding the terminal ends (131) of the stator winding (130) are erected at the other end side of the terminals (141) with respect to the connecting piece (150) of the terminal block part (140).

6. The stator assembly (100) according to claim 5, wherein the binding pins (142) protrude from surfaces of the terminals (141) through notches (141a) formed at the terminals (141).

7. The stator assembly (100) according to claim 5 or 6, wherein the terminal ends (131) bound to the binding pins (142) are cut off.

8. The stator assembly (100) according to claim 5 or 6, wherein the terminal ends (131) bound to the binding pins (142) are sealed with a potting agent.

9. The stator assembly (100) according to any one of claims 1 to 8, wherein parts of surfaces of the terminals (141) at a side opposite to the connecting piece (150) side are exposed.

10. The stator assembly (100) according to any one of claims 1 to 9, wherein an R-chamfer (150a) with corners removed is provided at end parts of a surface of the connecting piece (150), the surface opposing the terminals (141) side, the end parts being located at the stator core (110) side and at an opposite side.

11. The stator assembly (100) according to any one of claims 1 to 10, wherein grooves (151a) for accommodating the terminal ends (131) of the stator winding (130) are provided at one or both of the terminals (141) and the connecting piece (150).

12. The stator assembly (100) according to any one of claims 1 to 11, wherein
the connecting piece (150) is formed by arranging a plurality of pieces (151) made of metal at a resin body at intervals in a longitudinal direction, the resin body having an insulation property and elongated shape, and
a recessed part (152) or a protruding part (146) is provided at both end surfaces of the resin body in the longitudinal direction, the recessed part (152) being to be fitted with a protruding part (146) or a recessed part (152) provided at the terminal block part (140).

13. The stator assembly (100) according to claim 12, wherein an inclined surface with corners removed is provided at end parts of surfaces of the pieces (151), the surfaces opposing the terminals (141) side, the end parts being located at the stator core (110) side and/or at an opposite side.

14. The stator assembly (100) according to claim 12 or 13, wherein the terminal block part (140) includes a through-hole (140a) penetrating in an axial direction at least at positions of the pieces (151).

15. A resolver(1) comprising the stator assembly (100) according to any one of claims 1 to 14.
